# EUROPEAN PATENT APPLICATION

(11) **EP 4 597 684 A1**
(43) Date of publication of application: **06.08.2025**
(21) Application number: 23907610.2
(22) Date of filing: 15.12.2023
(51) Int. Cl.: H01M 10/42, A62C 2/06, A62C 35/10, A62C 3/16, H01M 50/682, A62D 1/00, H01M 50/251, H01M 50/691, H01M 50/24

(54) **BATTERY PACK WITH IMPROVED FIRE PROTECTION PERFORMANCE**

(30) Priority: 20.12.2022 KR 20220179747; 20.12.2022 KR 20220179748
(71) Applicant: LG Energy Solution, Ltd., Seoul 07335 (KR)
(72) Inventor: CHOI, Dongmin, Daejeon 34122 (KR); KIM, Kiyoun, Daejeon 34122 (KR); AHN, Jong Kyu, Daejeon 34122 (KR); YUN, Youngwon, Daejeon 34122 (KR); KIM, Yongmin, Daejeon 34122 (KR); KIM, Youngbum, Daejeon 34122 (KR)
(74) Representative: Plasseraud IP
(86) International application number: PCT/KR2023/020718
(87) International publication number: WO 2024/136324

(57) **Abstract**

A battery pack according to one embodiment of the present disclosure includes: a cell module assembly including a battery cell stack in which a plurality of battery cells are stacked; a pack case that houses the cell module assembly in its internal space; and a fire extinguishing unit capable of extinguishing the battery cells by supplying a fire extinguishing agent into the pack case when a thermal event occurs in the battery cells, wherein the pack case includes at least one drain port on at least one of a longitudinal edge and a widthwise edge of the bottom surface of the pack case.

## Description

### [TECHNICAL FIELD]

### Cross Citation with Related Application(s)

This application claims the benefit of Korean Patent Application No. 10-2022-0179747 filed on December 20, 2022 and Korean Patent Application No. 10-2022-0179748 filed on December 20, 2022 in the Korean Intellectual Property Office, the disclosures of which are incorporated herein by reference in their entirety.

The present disclosure relates to a battery pack, and more particularly, to a battery pack and the like configured to facilitate drainage when moisture occurs within the battery pack during normal times.

The present disclosure also relates to a battery pack, and more particularly, to a battery pack and the like configured to remain a fire extinguishing agent (fire extinguishing liquid) within the battery pack for a longer period of time when a thermal event occurs.

### [BACKGROUND]

Currently, commercially available secondary batteries include a nickel cadmium battery, a nickel hydrogen battery, a nickel zinc battery, a lithium secondary battery, and the like, and among them, the lithium secondary battery has come into the spotlight because it has advantages, for example, hardly exhibiting memory effects compared to nickel-based secondary batteries and thus being freely charged and discharged, and having very low self-discharge rate and high energy density.

A lithium secondary battery generally uses lithium-based oxide and a carbon material as a positive electrode active material and a negative electrode active material respectively. The lithium secondary battery includes an electrode assembly in which a positive electrode plate and a negative electrode plate respectively coated with the positive electrode active material and the negative electrode active material are arranged with a separator interposed between them, and an exterior material or a battery case which hermetically houses the electrode assembly together with an electrolyte.

Depending on the shape of the exterior material, generally, a lithium secondary battery may be classified into a can type secondary battery where the electrode assembly is incorporated into a metal can and a pouch type battery where the electrode assembly is incorporated into a pouch of an aluminum laminate sheet.

Such secondary batteries are widely used not only in small-sized devices such as portable electronic devices, but also in medium- and large-sized devices such as electric vehicles and energy storage systems (ESS), and the frequency of the use thereof is rapidly increasing. Moreover, recently, the tendency of using home battery packs for storing electrical power is increasing.

### [DETAILED DESCRIPTION OF THE INVENTION]

### [Technical Problem]

It is an object of the present disclosure to provide a battery pack configured to facilitate drainage when moisture occurs within the battery pack during normal times.

It is another object of the present disclosure to provide a battery pack configured to remain a fire extinguishing agent (fire extinguishing liquid) within the battery pack for a longer period of time when a thermal event occurs.

However, the technical problems to be solved by embodiments of the present disclosure are not limited to the above-mentioned problems, and other problems not mentioned herein can be clearly understood by those skilled in the art from the following description.

### [Technical Solution]

According to one embodiment of the present disclosure, there is provided a battery pack comprising: a cell module assembly including a battery cell stack in which a plurality of battery cells are stacked; a pack case that houses the cell module assembly in its internal space; and a fire extinguishing unit capable of extinguishing the battery cells by supplying a fire extinguishing agent into the pack case when a thermal event occurs in the battery cells, wherein the pack case includes at least one drain port on at least one of a longitudinal edge and a widthwise edge of a bottom surface of the pack case.

The battery pack may further comprise a thermal expansion member that is located in the drain port and is expanded in volume at a prescribed temperature or higher to seal the drain port.

The thermal expansion member is arranged apart from an inner surface of the drain port by a prescribed distance, and the battery pack may further comprise a thermal expansion member coupling portion that is arranged across a cross section of the drain port so as to secure the thermal expansion member.

At least one end of the thermal expansion member is provided with a groove, the thermal expansion member coupling portion has a bar shape, and the thermal expansion member coupling portion may be fixedly coupled to the groove of the thermal expansion member.

The thermal expansion member coupling portion may be arranged on at least one of an inlet and an outlet of the drain port.

The thermal expansion member may have a pin shape that is arranged along the path of the drain port.

The thermal expansion member and the inner surface of the drain port may be arranged coaxially.

The thermal expansion member may be surrounded by at least a portion of the inner surface of the drain port while contacting with each other.

The thermal expansion member may be made of a polymer material.

The thermal expansion member may be any one selected from the group consisting of PDMS (Poly-Di-Methyl-Siloxane), polyvinylacetate, polystyrene, butyl(meth)acrylate, hexyl(meth)acrylate, n-octyl(meth)acrylate, isooctyl(meth)acrylate, 2-ethylhexyl(meth)acrylate, isononyl(meth)acrylate, and a combination thereof.

The thermal expansion member may include a shim of a heat-resistant material located inside the thermal expansion member along the longitudinal direction of the thermal expansion member.

The fire extinguishing unit may be a fire extinguishing tank that is located above the cell module assembly to cover an upper surface of the pack case.

The fire extinguishing agent may be a fire extinguishing agent in a liquid state.

A bottom surface of the drain port may be lowered in height from the inside to the outside of the pack case.

The cross section of the drain port may have a tapered shape that increases in size from the inside to the outside of the pack case.

**In** the internal space of the pack case, the bottom surface further comprises a plurality of protruding surfaces that protrudes upward from the bottom surface, and a first drain passage between the plurality of protruding surfaces, and the plurality of protruding surfaces may be arranged in a row along at least one of a length direction and a width direction of the pack case.

The protruding surface comprises an uppermost surface located at the center of the protruding surface and on which the cell module assembly is seated; and an inclined surface formed radially around the uppermost surface, wherein a height of the inclined surface may decrease from the uppermost surface toward an edge of the protruding surface.

The uppermost surface is formed in a circular plate shape, and the radially formed inclined surface may be arranged at an equal angle with respect to the center of the protruding surface.

The first drain passage may be arranged in parallel to at least one of the longitudinal edge and the widthwise edge of the bottom surface of the pack case.

The bottom surface of the drain port may have a height equal to or lower than that of the first drain passage.

The internal space of the pack case further includes a second drain passage arranged at a longitudinal edge and a widthwise edge of the bottom surface of the pack case, and the second drain passage may have a height equal to or lower than that of the first drain passage.

The bottom surface of the drain port may have a height equal to or lower than that of the second drain passage.

The pack case further comprises a plate-shaped compartment wall arranged across the pack case, the internal space of the pack case is divided into a housing space for the cell module assembly and a housing space for an electrical connection unit on the basis of the compartment wall, and the plurality of protruding surfaces and the first drain passage may be provided in at least one of the housing space of the cell module assembly and the housing space of the electrical connection unit.

The battery pack further comprises an auxiliary case made of metal that primarily houses the cell module assembly, the cell module assembly is housed in the auxiliary case, with the auxiliary case being seated on an uppermost surface of the protruding surface of the pack case, and the auxiliary case may include at least one opening on a bottom surface of the auxiliary case.

The opening may be provided at an edge of the bottom surface of the auxiliary case or a corner of the bottom surface of the auxiliary case.

The battery pack is provided in a plurality of numbers, and the plurality of battery packs may be mechanically or electrically connected to each other.

The plurality of battery packs can be stacked in an up and down direction.

The electrical connection between the plurality of battery packs may be connected in series so that voltage bands of the plurality of stacked battery packs can be realized in various ways.

The electrical connection between the plurality of battery packs may be connected in parallel so that the storage capacity of the plurality of stacked battery packs can be realized in various ways.

According to another aspect of the present disclosure for achieving the above object, there is provided an energy storage system comprising one or more of the above-mentioned battery pack according to the present disclosure.

### [Advantageous Effects]

According to one aspect of the present disclosure, there can be provided a battery pack that ensures drainage performance and battery cell safety to prevent moisture from affecting the battery cells when moisture normally occurs inside the battery pack due to dew condensation, snow, rain, or the like.

According to one aspect of the present disclosure, when a fire or thermal runaway occurs in the cell module assembly, the thermal expansion member is configured to expand in volume at a prescribed temperature or higher and seal the drain port, whereby when the fire extinguishing agent (fire extinguishing liquid) is supplied to the inside of the pack case, the fire extinguishing agent (fire extinguishing liquid) is not discharged to the outside of the pack case through the drain port. Thereby, the fire extinguishing agent (fire extinguishing liquid) can remain in the cell module assembly 100 inside the pack case for a longer period of time. That is, fire or thermal runaway of the cell module assembly can be suppressed more stably.

Further, according to one aspect of the present disclosure, it is not necessary to design a special waterproof and dustproof structure.

Further, according to one aspect of the present disclosure, products with various voltage bands and/or storage capacities can be provided by stacking the same type of battery packs stacked in a plurality of numbers.

In addition, some other additional effects can be achieved by various embodiments of the present disclosure. Various effects obtainable from the present disclosure will be described in detail in respective embodiments, or the description of effects that can be easily understood by those skilled in the art will be omitted.

### [BRIEF DESCRIPTION OF THE DRAWINGS]

The accompanying drawings illustrate preferred embodiments of the present disclosure and, together with the following descriptions, serve to provide further understanding of the technical spirit of the present disclosure. However, the present disclosure is not to be construed as being limited to the drawings.
FIG. 1 is an exploded perspective view schematically showing the configuration of a battery pack according to an embodiment of the present disclosure.
FIG. 2 is a diagram schematically showing the configuration in which a fire extinguishing agent is discharged from the battery pack of FIG. 1.
FIG. 3 is a perspective view schematically showing the configuration of a battery pack according to another embodiment of the present disclosure.
FIG. 4 is a cross-sectional view taken along line A4-A4' in FIG. 3.
FIG. 5 is an exploded perspective view schematically showing the configuration of a battery pack according to another embodiment of the present disclosure.
FIG. 6 is a perspective view of a cell module assembly included in the battery pack of FIG. 5.
FIG. 7 is a perspective view of a blocking member included in the battery pack of FIG. 5.
FIG. 8 is a perspective view of a pack case included in the battery pack of FIG. 5.
FIGS. 9 and 10 are diagrams illustrating a case where the cell module assembly of FIG. 8 is housed in a pack case.
FIG. 11 is a top view of the pack case of FIG. 8.
FIGS. 12 and 13 are partial enlarged views of the pack case.
FIGS. 14 and 15 each illustrate embodiments of a thermal expansion member.
FIG. 16 is a perspective view of a fire extinguishing tank included in the battery pack of FIG. 5.
FIG. 17 is a perspective cross-sectional view of the fire extinguishing tank of FIG. 16.
FIG. 18 is a perspective view of a battery pack in which all the constituent elements of the above-mentioned battery pack are coupled with each other with reference to FIGS. 5 to 17.
FIG. 19 is a perspective view schematically showing the battery pack of FIGS. 1 to 18.
FIGS. 20 and 21 are diagrams showing an embodiment in which the pack cases shown in FIG. 19 are stacked in mutually different numbers.

### [DETAILED DESCRIPTION OF THE EMBODIMENTS]

Hereinafter, preferred embodiments of the present disclosure will be described in detail with reference to the accompanying drawings. Prior to description, it should be understood that terms and words used in the specification and the appended claims should not be construed as limited to general and dictionary meanings, but interpreted as having meanings and concepts corresponding to technical aspects of the present disclosure based on the principle that the inventor can properly define the concepts of the terms and words in order to describe his/her own invention as best as possible.

Therefore, the description proposed herein is just a preferable example for the purpose of illustrations only, and is not intended to limit the scope of the disclosure, so it will be apparent to those skilled in the art that other equivalents and modifications can be made thereto without departing from the spirit and scope of the invention.

A description of portions that are not related to the description will be omitted for clarity, and same reference numerals designate same or like elements throughout the description.

Further, in the drawings, the size and thickness of each element are arbitrarily illustrated for convenience of description, and the present invention is not necessarily limited to those illustrated in the drawings. In the drawings, the thickness of layers, areas, etc. are exaggerated for clarity. In the drawings, for convenience of description, the thicknesses of a part and an area are exaggerated.

Further, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, a certain part being located "above" or "on" a reference portion means the certain part being located above or below the reference portion and does not particularly mean the certain part "above" or "on" toward an opposite direction of gravity.

Further, throughout the description, when a portion is referred to as "including" or "comprising" a certain component, it means that the portion can further include other components, without excluding the other components, unless otherwise stated.

Further, throughout the description, when referred to as "planar", it means when a target portion is viewed from the upper side, and when it is referred to as "cross-sectional", it means when a target portion is viewed from the side of a cross section cut vertically.

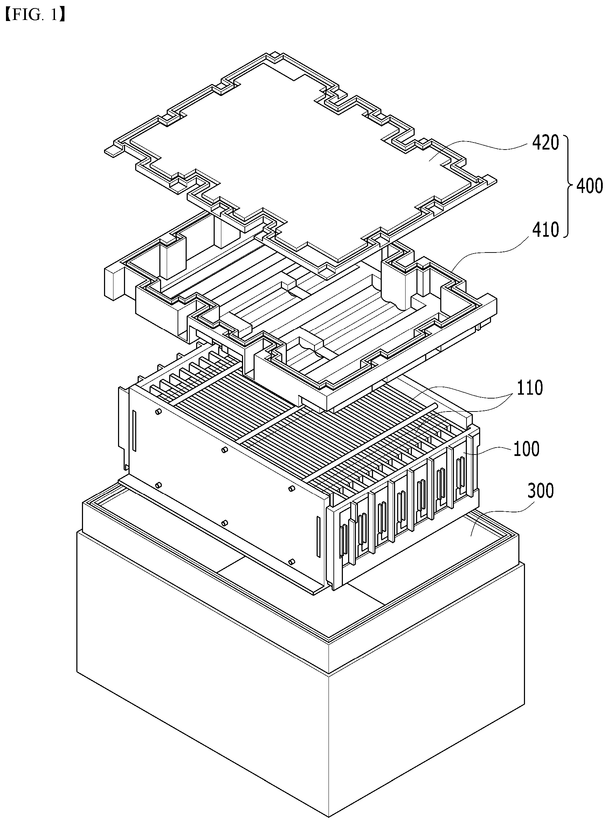

FIG. 1 is an exploded perspective view schematically showing the configuration of a battery pack according to an embodiment of the present disclosure.

Referring to FIG. 1, the battery pack according to the present disclosure includes a cell module assembly 100, a pack case 300, and a fire extinguishing tank 400.

The cell module assembly 100 may include one or more battery cells 110. Here, each battery cell 110 may mean a secondary battery. The secondary battery may include an electrode assembly, an electrolyte, and a battery case. Particularly, the battery cell 110 provided in the cell module assembly 100 may be a pouch type secondary battery. However, other forms of secondary batteries, such as cylindrical batteries or prismatic batteries, may also be employed in the cell module assembly 100 of the present disclosure.

A plurality of secondary batteries may form the cell module assembly 100 in a shape stacked with each other. That is, the battery cell stack can form the cell module assembly 100. For example, the plurality of battery cells 110 may be stacked in such a manner that they are arranged in a horizontal direction (X-axis direction in the figure) while being erected in an up and down direction (Z-axis direction in the figure). Each battery cell 110 may be provided with an electrode lead, wherein the electrode lead may be located at both end parts, or may be located at one end part of each battery cell 110. A secondary battery in which electrode leads protrude in both directions may be called a bidirectional cell, and a secondary battery in which electrode leads protrude in one direction can be called a unidirectional cell. In FIG. 1, a bidirectional cell is illustrated. However, the present disclosure is not limited by a specific type or form of the secondary battery, and various forms of secondary batteries known at the time of filing the present application can be employed in the cell module assembly 100 of the present disclosure.

The pack case 300 may be configured to have an empty space formed therein and house the cell module assembly 100 in the internal space. For example, the pack case 300 may be configured in a box shape as shown in FIG. 1. The box-shaped pack case 300 may be integrally molded, or may be made by coupling at least one surface with an adjacent surface.

The fire extinguishing tank 400 can hold a fire extinguishing agent. Particularly, the fire extinguishing tank 400 comprises an internal space and can hold a fire extinguishing agent in the internal space. For example, the fire extinguishing tank 400 may comprise a lower tank 410 and an upper cover 420, as shown in FIG. 1. Here, the lower tank 410 is configured in the form of a box having an opened upper part, and can provide a space where a fire extinguishing agent can be held. In addition, the upper cover 420 may be configured to cover the upper opening part of the lower tank 410 and seal the fire extinguishing agent holding space of the lower tank 410.

The fire extinguishing tank 400 may be housed inside the pack case 300. In particular, the fire extinguishing tank 400 may be arranged on an upper side of the cell module assembly 100 in the internal space of the pack case 300.

According to such an embodiment configuration of the present disclosure, a fire extinguishing agent is discharged from the fire extinguishing tank 400 located on the upper side of the cell module assembly 100, so that the thermal event of the cell module assembly 100 can be more easily controlled. Particularly, the fire extinguishing agent discharged from the fire extinguishing tank 400 can easily move downward by gravity. Therefore, heat or fire suppression of the cell module assembly 100 using a fire extinguishing agent can be performed more easily.

Particularly, when the cell module assembly 100 is provided with a plurality of battery cells 110 arranged side by side in the horizontal direction, that is, in the left and right direction (X-axis direction), as shown in FIG. 1, a fire extinguishing agent can be easily supplied to all battery cells 110 if the fire extinguishing agent is discharged from the fire extinguishing tank 400 located at the upper part. Therefore, according to such an embodiment configuration, thermal event suppression for the entire cell module assembly 100 can be performed more effectively.

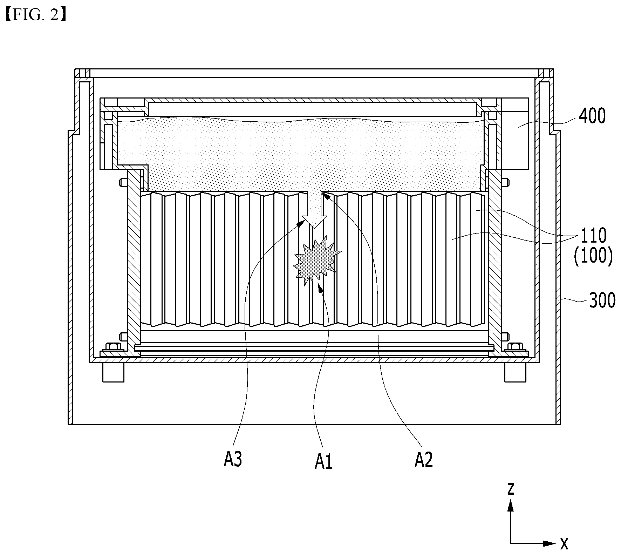

The fire extinguishing tank 400 may be configured to discharge a fire extinguishing agent toward the cell module assembly 100 when heat is applied from the cell module assembly 100. This will be described in more detail with reference to FIG. 2.

FIG. 2 is a diagram schematically showing the configuration in which a fire extinguishing agent is discharged from the battery pack of FIG. 1.

Referring to FIG. 2, a fire extinguishing tank 400 is located at the upper part of the cell module assembly 100. A thermal event such as overheating, ignition, or thermal runaway may occur in a specific battery cell 110, such as a portion indicated by A1 among a plurality of battery modules stacked in a left and right direction (e.g., the X-axis direction in the figure). In this case, the heat generated in the corresponding battery cell 110 may be applied to the fire extinguishing tank 400, such as a portion indicated by A2 in FIG. 2. Then, the fire extinguishing agent may be discharged from the fire extinguishing tank 400, as indicated by arrow A3.

Particularly, the fire extinguishing tank 400 may be configured to be at least partially melted by heat applied from the cell module assembly 100. For example, in the configuration of FIG. 2, the portion indicated as A2 of the fire extinguishing tank 400 may be melted by heat. Then, through the portion melted in this way, the fire extinguishing agent can be discharged, as indicated by an arrow A3.

For this purpose, the fire extinguishing tank 400 may be constructed of a material that can be at least partially melted by the heat applied from the cell module assembly 100. For example, the fire extinguishing tank 400 may be wholly constructed of a plastic material. In particular, the fire extinguishing tank 400 may be constructed in the form of a plastic injection material.

Further, the fire extinguishing tank 400 can be configured to be melted by venting gas or heat ejected from the battery cell 110. For example, when a thermal runaway occurs in the battery cell 110 and venting gas is ejected, the venting gas may be in a high-temperature state of a certain temperature or higher. The fire extinguishing tank 400 may be constructed of a material and/or form that can be melted by the high-temperature venting gas. Alternatively, when a thermal runaway occurs in the battery cell 110, the temperature of the battery cell 110 may be higher than the normal state even if the venting gas is not ejected. The fire extinguishing tank 400 may be constructed of a material and/or form that can be melted by heat applied from the battery cell 110 in such an abnormal high-temperature state.

In particular, the fire extinguishing tank 400 may be configured so that the base plate 411 is melted by a high temperature of heat and/or gas generated in the thermal event of the battery cell 110. In this case, the fire extinguishing agent may flow into the bottom melting section of the fire extinguishing tank 400 and be discharged downward. Therefore, the fire extinguishing agent can be quickly injected into the cell module assembly 100.

According to such an embodiment configuration of the present disclosure, the fire extinguishing agent is injected in such a way that the injection material melts, thereby effectively suppressing thermal events inside the battery pack, and also minimizing thermal event propagation between battery cells 110.

The fire extinguishing tank 400 may hold a fire extinguishing agent in a liquid state. In this case, the fire extinguishing agent may be referred to as fire extinguishing liquid. For example, the fire extinguishing tank 400 may hold water or other cooling liquid as a fire extinguishing agent. Further, the fire extinguishing tank 400 can hold antifreeze as a fire extinguishing agent. In particular, when the battery pack is used in low-temperature seasons such as winter or in low-temperature areas such as polar regions, the fire extinguishing tank 400 can hold antifreeze, which does not easily freeze even at low temperatures, as a fire extinguishing agent. Moreover, in the case of a home battery pack, since it can be located outdoors, antifreeze can be provided as a fire extinguishing agent.

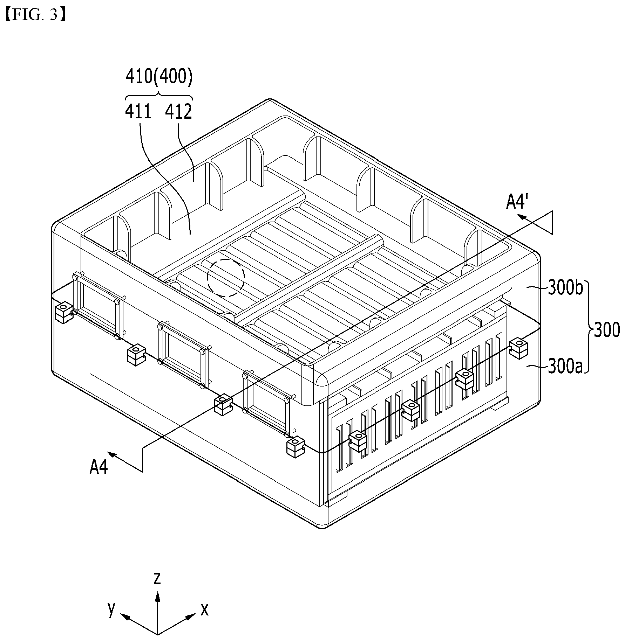

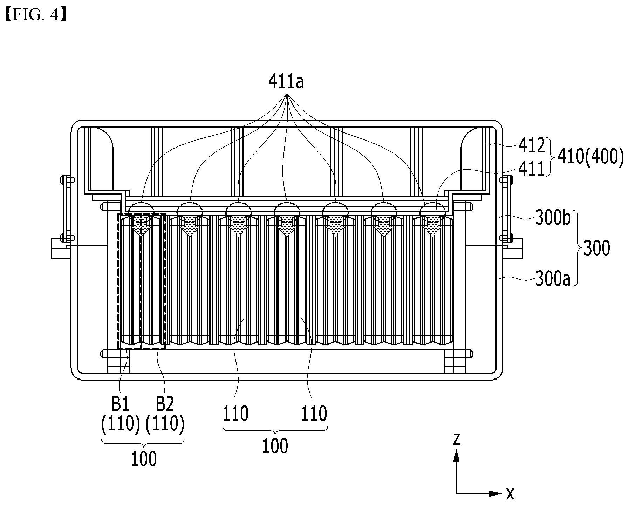

The fire extinguishing tank 400 may be configured so that the thickness of the base plate 411 varies depending on its position. This will be described in more detail with reference to FIGS. 3 and 4.

FIG. 3 is a perspective view schematically showing the configuration of a battery pack according to another embodiment of the present disclosure. However, in FIG. 3, for convenience of explanation, some components are illustrated transparently. FIG. 4 is a cross-sectional view taken along line A4-A4' in FIG. 3. Regarding various embodiments included in this specification, including the present embodiment, detailed descriptions of the parts that can be applied identically or similarly to the portions described in other embodiments will be omitted, and the portions where there are differences will be mainly described.

Referring to FIGS. 3 and 4, the fire extinguishing tank 400 may include a base plate 411 and a side wall 412. Here, the side wall 412 may be configured to protrude upward from the edge of the base plate 411. Further, the lower part and the side part of the fire extinguishing tank 400 are limited by the base plate 411 and the side wall 412, thereby forming a space capable of holding the fire extinguishing agent. At this time, the upper part of the fire extinguishing tank 400 may be sealed by the pack case 300. That is, as shown in FIG. 4, the pack case 300 includes a lower case 300a and an upper case 300b, and the upper part of the fire extinguishing tank 400 is covered by the upper case 300b, so that a fire extinguishing agent may be held inside the fire extinguishing tank 400. Alternatively, the fire extinguishing tank 400 may be configured so as to include an upper cover 420 to seal the upper part of the fire extinguishing agent holding space, as shown in FIG. 1.

In this manner, in the configuration of the fire extinguishing tank 400 provided with the base plate 411, the base plate 411 may be formed to have different thicknesses for each portion. In particular, the fire extinguishing tank 400 may be configured to have a thin thickness in certain portions, such as the portion indicated by 411a in FIGS. 3 and 4. For example, the base plate 411 of the fire extinguishing tank 400 is constructed in the form of a plastic injection material having a thickness of 1 mm as a whole, and the portion indicated by 411a may be configured to have a thickness of 0.5 mm.

In particular, a thinly formed portion of the base plate 411 of the fire extinguishing tank 400 may function as a fragile portion 411a. That is, when the temperature rises in the cell module assembly 100, such a fragile portion 411a may be damaged first. Further, if the fragile portion 411a is damaged, the fire extinguishing agent held inside the fire extinguishing tank 400 may be discharged toward the cell module assembly 100 via the fragile portion 411a.

The fragile portion 411a may be provided in a plurality of numbers. For example, the fragile portion 411a may have a shape narrow in width and long in length. That is, it may have a linear shape and may be arranged in parallel with one edge of the fire extinguishing tank 400, and the fragile portions 411a may be arranged in parallel to each other.

According to the above embodiment configuration, if venting gas, fire or the like occurs due to thermal runaway on the cell module assembly 100 side, a structure for injecting a fire extinguishing agent such as cooling water does not need to be separately provided. Therefore, the configuration for injection the fire extinguishing agent inside the battery pack can be realized with a simple structure. Furthermore, in such a configuration, when an event occurs, the fire extinguishing agent can be discharged through the fragile portion 411a formed in a thin thickness, and thus, the portion where the fire extinguishing agent is discharged can be designated in advance.

In the above embodiment configuration, as shown in FIG. 4, a plurality of fragile portions 411a may be provided in one fire extinguishing tank 400. Moreover, the plurality of fragile portions 411a can be arranged on the base plate 411 of the fire extinguishing tank 400 while being spaced apart by a prescribed distance along the stacking direction of the cell module assembly 100. For example, in the cell module assembly 100, a plurality of battery cells 110 may be stacked in the left and right direction (X-axis direction), and in the base plate 411 of the fire extinguishing tank 400 located at the upper part of the cell module assembly 100, a plurality of fragile portions may also be arranged in the left and right direction while being spaced apart from each other.

In particular, the fire extinguishing tank 400 may be configured such that the fragile portion 411a having a relatively thin thickness is located in the central portion between cells stacked in the horizontal direction.

For example, in the configuration of FIG. 4, B1 and B2, which are two battery cells 110, are arranged adjacent to each other in the left and right direction in the left side portion of the cell module assembly 100. At this time, the fragile portion 411a located on the leftmost side among several fragile portions 411a may be arranged between B1 and B2 in the left and right direction. That is, the fragile portion 411a may be located at an upper part of B1 and B2 in the up and down direction (Z-axis direction), but may be located between B1 and B2 in the horizontal direction (X-axis direction). Further, the battery cells 110 other than B1 and B2 can also be configured such that one fragile portion 411a is located in the space between respective two adjacent battery cells 110 in the horizontal direction.

According to such an embodiment configuration of the present disclosure, when a thermal event occurs in a specific battery cell 110 and heat is applied to the fragile portion 411a located at the upper part, the fragile portion 411a may be damaged. And, the fire extinguishing agent is discharged through the damaged fragile portion 411a, and a fire extinguishing agent may flow into the space between adjacent battery cells 110 as indicated by the arrow in FIG. 4.

Therefore, according to such an embodiment configuration, it is possible to more effectively prevent thermal events from being transmitted between battery cells 110. Further, according to the embodiment configuration of the present disclosure, it is possible to intensively inject the fire extinguishing agent around the battery cell 110 where a thermal event such as overheating or ignition has occurred, so that more effective cooling and extinguishing operations can be performed. Therefore, according to the above embodiment configuration, when a fire or the like occurs inside the battery, it may be possible to inject a fire extinguishing agent in the right time and the right place without any other parts except for the fire extinguishing tank 400.

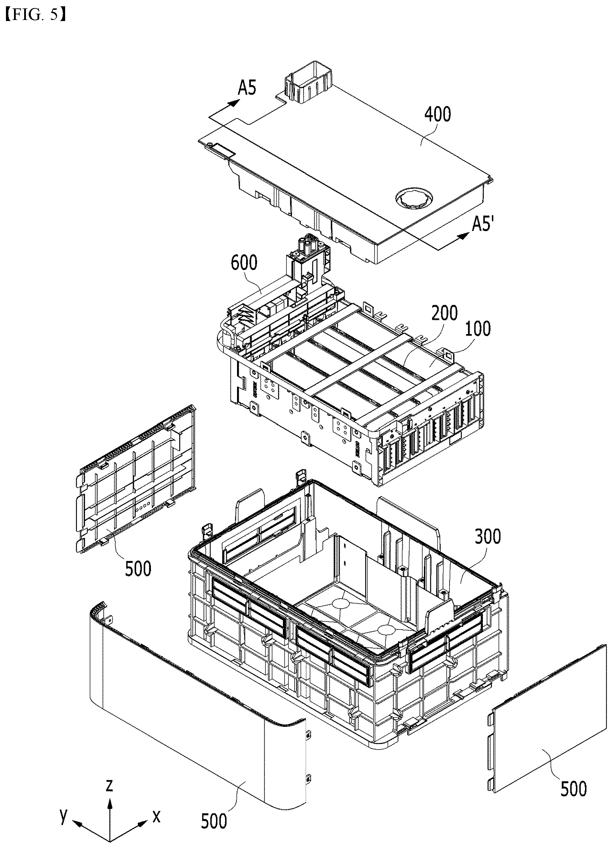

FIG. 5 is an exploded perspective view schematically showing the configuration of a battery pack according to another embodiment of the present disclosure.

Referring to FIG. 5, the battery pack includes a cell module assembly 100, a blocking member 200, a pack case 300, a fire extinguishing tank 400, an outer cover 500, and an electrical connection unit 600.

Also in FIG. 5, the cell module assembly 100 may be configured such that the plurality of battery cells 110 (see FIG. 1) are stacked in a shape arranged in a horizontal direction (e.g., the X-axis direction in the figure) while being erected in the up and down direction (e.g., the Z-axis direction in the figure). At this time, the longitudinal direction of the battery cell 110 is, for example, the Y-axis direction in the figure. For convenience of understanding, the illustration of the battery cell 110 is omitted in FIG. 5. When the battery cell 110 is, for example, a pouch type battery cell or a prismatic battery cell, the battery cell 110 is arranged side by side (in parallel) with the blocking member 200.

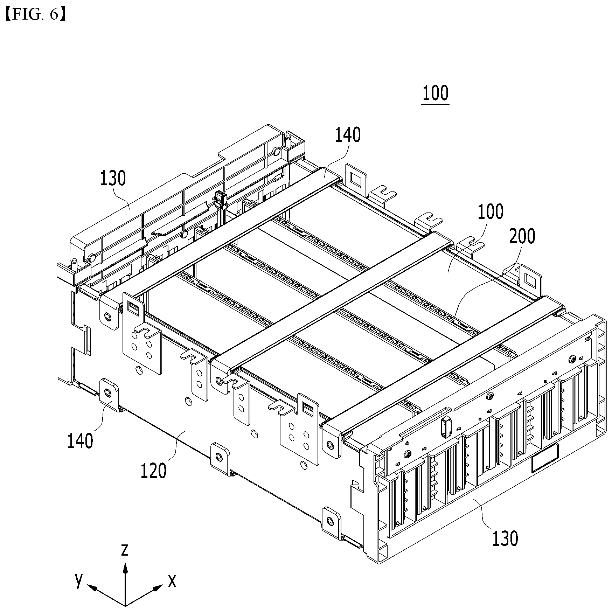

FIG. 6 is a perspective view of a cell module assembly 100 included in the battery pack of FIG. 5.

For reference, in order to more clearly illustrate the components included in the cell module assembly 100, FIG. 6 shows the remaining components excluding the plurality of battery cells 110. The plurality of battery cells 110 may be normal pouch type battery cells or prismatic battery cells.

Referring to FIG. 6, a pair of busbar housings 130 are arranged on the front and rear surfaces of the stack of a plurality of battery cells 110. Each of the busbar housings 130 is arranged in a direction perpendicular to the longitudinal direction of the battery cell 110 (e.g., the X-axis direction in the figure).

A pair of end plates 120 are provided at both side ends of the stack of the plurality of battery cells 110, respectively. The end plate 120 is arranged in parallel with the battery cell 110. A pair of end plates 120 each connect a pair of busbar housings 130.

Each of the upper and lower sides between the pair of end plates 120 may include at least one strap 140 that connects between the pair of end plates 120. The strap 140 strengthens the binding of the cell module assembly 100. More specifically, it strengthens the binding between the pair of end plates 120 and the stack of the plurality of battery cells 110 arranged between them. Thereby, it is possible to prevent the alignment of the stack of the plurality of battery cells 110 from being disturbed.

In addition, since the description regarding the cell module assembly 100 overlaps with that described in FIG. 1, reference is made to those described above in relation to FIG. 1.

Meanwhile, as shown in FIG. 5, a plurality of battery cells 110 can be grouped into a predetermined number and housed. Further, as shown in FIGS. 5 to 7, a blocking member 200 is provided between a group of a plurality of battery cells 110 (a predetermined number) and an adjacent group of a plurality of battery cells 110 (a predetermined number).

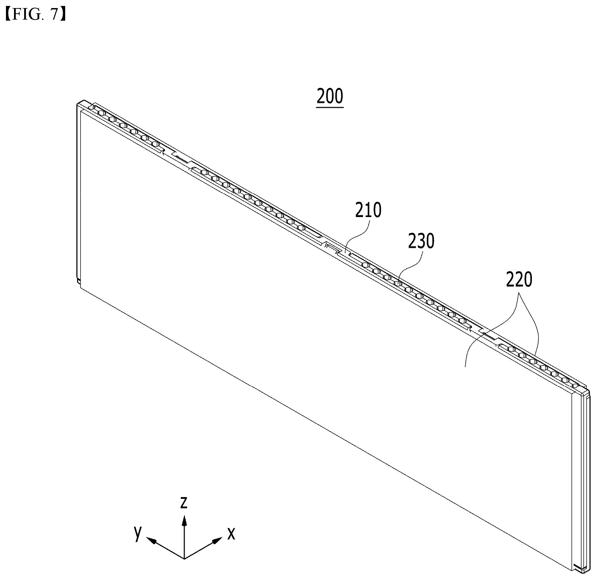

FIG. 7 is a perspective view of a blocking member 200 included in the battery pack of FIG. 5. The blocking member 200 may be configured to be interposed between adjacent battery cells 110 to block heat. For example, when a thermal event occurs in some of the battery cells 110 and heat or high-temperature venting gas is generated, the generated heat or gas may be suppressed or blocked from being transferred to the adjacent battery cell 110 by the blocking member 200. Further, the blocking member 200 can play a role of blocking flames or sparks emitted from a specific battery cell 110.

The blocking member 200 has a substantially plate-like shape. The blocking member 200 may be configured in a plate shape being erected in the up and down direction. Moreover, the blocking member 200 may have a height that is the same as or similar to the height of the battery cell 110 being erected in the up and down direction. The height of the blocking member 200 may be smaller or larger than the height of the battery cell 110.

A plurality of blocking member 200 may be included depending on the number of battery cells. And, as described above, the blocking member 200 can be stacked together with the battery cells 110 to form the cell module assembly 100.

According to such an embodiment configuration of the present disclosure, in a battery pack containing a plurality of battery cells 110, the blocking member 200 can effectively prevent propagation of thermal runaway between battery cells.

Further, the blocking member 200 may largely have a three-layer structure. For example, a pair of swelling pads 220 are provided on both surfaces of the support plate 210, respectively. The support plate 210 maintains the shape and rigidity of the blocking member 200 and blocks flames or sparks emitted from the battery cells 110 from being transferred between the battery cells 110. The support plate 210 may be made of, for example, a metal material. The swelling pad 220 reduces the pressure applied to the battery cell 110 by the support plate 210 when the battery cell 110 swells. The swelling pad 220 may be made of, for example, silicone or soft plastic material.

On the other hand, the support plate 210 includes a plurality of through holes 230 formed by penetrating the support plate 210 in the up and down direction, and the plurality of through holes 230 are arranged along the longitudinal direction of the support plate 210.

When fire extinguishing agent (fire extinguishing liquid) is injected into the cell module assembly 100 from the fire extinguishing tank 400 located at the upper part of the cell module assembly 100, a fire extinguishing agent (fire extinguishing liquid) also enters the plurality of through holes 230. That is, as the fire extinguishing agent (fire extinguishing liquid) remains in the plurality of through holes 230, the battery cell 110 in which the thermal event has occurred can be cooled and extinguished more effectively.

The plurality of through holes 230 may be configured to be opened on both the upper and lower surfaces of the support plate 210. Alternatively, the plurality of through holes 230 may have a shape in which only the upper surface is opened and the lower surface is closed so that the fire extinguishing agent (fire extinguishing liquid) can remain within the through holes 230 for a longer period of time. In the former case, if the support plate 210 of the blocking member 200 is arranged in close contact with the inner lower surface of the pack case 300, the fire extinguishing agent (fire extinguishing liquid) may remain in the through hole 230 for a long period of time as in the latter case.

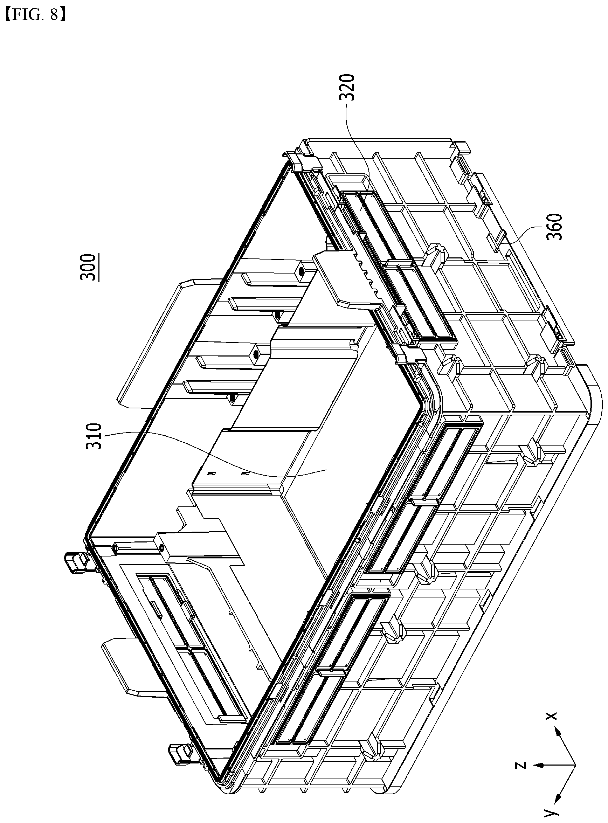

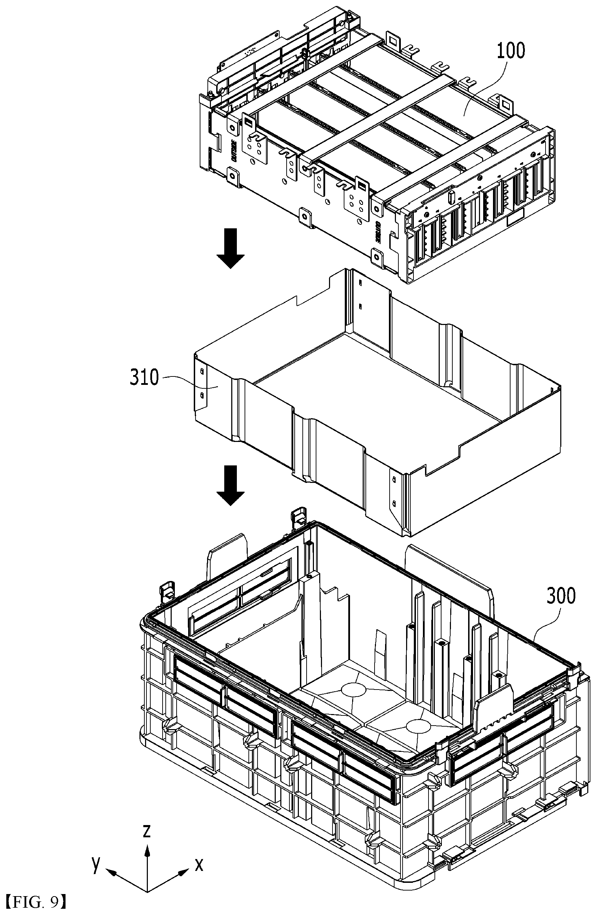

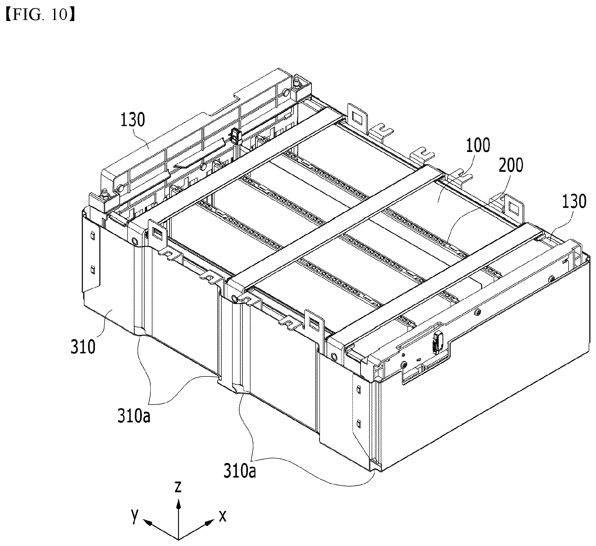

FIG. 8 is a perspective view of a pack case 300 included in the battery pack of FIG. 5. FIGS. 9 and 10 are diagrams illustrating a case where the cell module assembly 100 of FIG. 8 is housed in a pack case.

Referring to FIG. 8, the pack case 300 may be configured in a box shape. The box-shaped pack case 300 may be integrally molded, or may be manufactured in such a manner that at least one surface is coupled with an adjacent surface.

The pack case 300 includes at least one venting port 320. A filter is installed in the venting port 320.

When a thermal event occurs in the battery cell 110 housed inside the pack case 300, it is possible to discharge the venting gas generated from the battery cell 110 through the venting port 320. The venting gas discharged from the venting port 320 may pass a space between the pack case 300 and the outer cover 500 (see FIG. 5), and then be discharged to the outside of the outer cover 500.

Further, the internal space of the pack case 300 largely includes two housing spaces on the basis of the compartment wall 380. One is a space S1 in which the cell module assembly 100 is housed, and the other is a space S2 in which an electrical connection unit including the connector 610 is housed.

The space S2 on the bottom surface of the pack case 300 includes a connector through-hole portion 370 into which the connector 610 of the battery pack stacked on the lower layer can be inserted for electrically connecting between the battery packs stacked one above the other, as will be described later. Thereby, the connector 610 of the corresponding battery pack and the connector 610 of the battery pack stacked on the lower layer are connected to each other. Similarly, the connector 610 of the battery pack is connected to the connector 610 of the battery pack stacked on the upper layer in the same manner.

Meanwhile, as shown in FIGS. 9 and 10, the cell module assembly 100 shown in FIG. 6 may be housed in the internal space of an auxiliary case 310, and then be mounted on the pack case 300. The cell module assembly 100 is primarily housed in the internal space of the auxiliary case 310, and then finally housed in the pack case 300, thereby supplementing the rigidity of the cell module assembly 100 and preventing the alignment of the stack of the plurality of battery cells 110 at the cell module assembly 100 from being disturbed. The auxiliary case 310 may be made of metal, stainless steel, or the like by way of example.

Next, the drainage structure of the battery pack during normal times according to an embodiment of the present disclosure will be described.

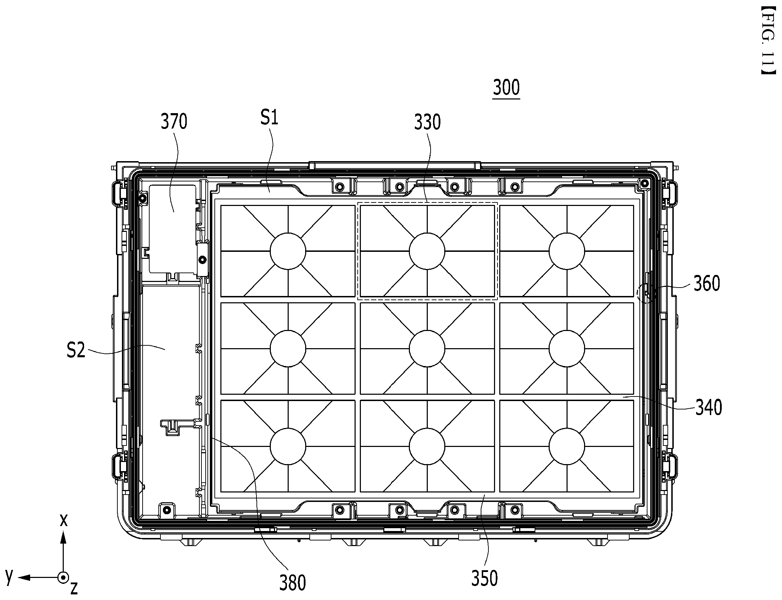

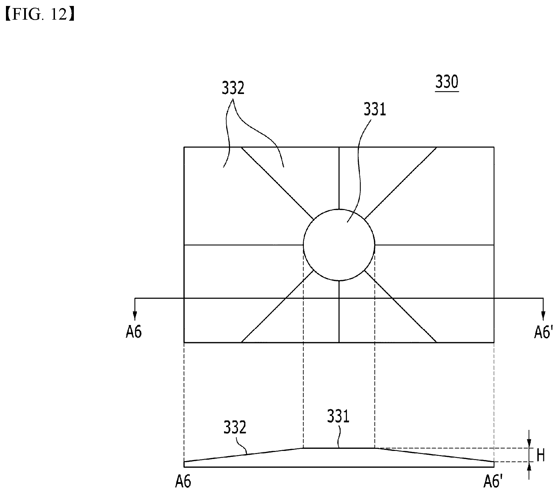

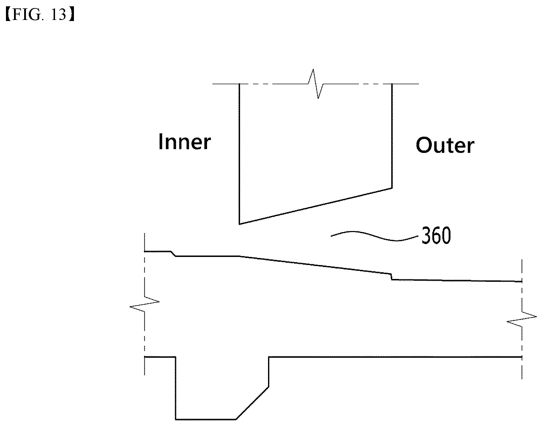

FIG. 11 is a top view of the pack case 300 of FIG. 8. FIGS. 12 and 13 are partial enlarged views of the pack case 300. For reference, FIGS. 11 to 13 are shown without the auxiliary case 310 shown in FIGS. 9 and 10.

First, a condensed water may occur in the internal space of the pack case 300 due to dew condensation. In some cases, moisture due to snow or rain may flow into the inside of the pack case 300, turn into water while being condensed, and exist in the internal space of the pack case 300. If water in the internal space of the pack case 300 accumulates on the bottom surface of the pack case 300 due to gravity, it may affect the performance of the battery cells or electrical connection unit 600 housed inside the pack case 300. In order to prevent such problems, the battery pack according to an embodiment of the present disclosure has a structure that can easily discharge moisture (humidity, water, etc.) that may exist inside the pack case 300 during normal times. An embodiment of the present disclosure includes the following components related to the drainage structure.

The bottom surface of the pack case 300 includes a plurality of protruding surfaces 330, as shown in FIG. 11. The protruding surfaces 330 are arranged in a row along at least one of a length direction and a width direction of the pack case 300. FIG. 12 shows the protruding surface 330 on an enlarged scale. The plurality of protruding surfaces 330 have a shape that protrudes upward from the bottom surface of the pack case 300. That is, the protruding surface 330 of the bottom surface of the pack case 300 is higher than other parts of the bottom surface of the pack case 300. A first drain passage 340 is arranged between the plurality of protruding surfaces 330. The first drain passage 340 has a height equal to or lower than the edge of the protruding surface 300. The height of the first drain passage 340 may decrease from the center of the bottom surface of the pack case 300 toward the edge thereof. Alternatively, the height of the first drain passage 340 may be flat as a whole.

Further, a second drain passage 340 may be further arranged along the edge of the bottom surface of the pack case 300 in the length direction (e.g., the Y-axis direction in the drawing) and/or along the edge in the width direction (e.g., the X-axis direction in the drawing). The first drain passage 340 and the second drain passage 340 are connected to each other. The first drain passage 340 has a height equal to or higher than the second drain passage 340. Further, the height of the bottom surface of the drain port 360, which will be described later, is the same or lower than the height of each of the first drain passage 340 and the second drain passage 340. The drain port 360 may, for example, have a tapered shape (a cone shape or a square pyramid shape with the top cut out).

The water in the internal space of the pack case 300 flows into the first drain passage 340 along the protruding surface 330 of the bottom surface of the pack case 300, and then is discharged to the outside through the drain port 360 which is arranged at the edge of the bottom surface of the pack case 300. Alternatively, the water that flows into the first drain passage 340 moves along the second drain passage 340 and is discharged to the outside through the drain port 360.

According to one embodiment of the present disclosure, the protruding surface 330 includes an uppermost surface 331 located at the center of the protruding surface 330 and an inclined surface 332 formed radially around the uppermost surface 331. The cell module assembly 100 is seated on the uppermost surface 331. The cell module assembly 100 may be seated in direct contact with the uppermost surface 331. Meanwhile, when the cell module assembly 100 is housed in the auxiliary case 310 as described later, the auxiliary case 310 housing the cell module assembly 100 may be seated in direct contact with the uppermost surface 331. The uppermost surface 331 may be circular as illustrated. However, the present disclosure is not limited thereto, and any shape that allows the cell module assembly 100 to be seated and supported thereon is sufficient.

As shown in the cross section taken along line A6-A6' of FIG. 13, the inclined surface 332 is lowered in height from the uppermost surface 331 to the edge of the protruding surface 330. The inclined surface 332 is formed radially on the basis of the center (e.g., the uppermost surface 331) of the protruding surface 330. It may be formed radially and arranged at an equal angle based on the center of each protruding surface 330.

Further, according to an embodiment of the present disclosure, a plurality of protruding surfaces 330 are provided. The plurality of protruding surfaces 330 are arranged in a row along the length direction and the width direction of the bottom surface of the pack case 300, respectively. They are arranged in a so-called grid shape (checkerboard shape). The first drain passage 340 arranged between the protruding surfaces 330 is arranged in parallel to the longitudinal edge and/or the widthwise edge of the bottom surface of the pack case 300.

Moreover, the edge of the bottom surface of the pack case 300 includes at least one drain port 360. That is, the pack case 300 may include one drain port 360. Alternatively, the pack case 300 may include a plurality of drain ports 360 arranged in a row, or respectively arranged on all four sides of the front, rear, left, and right of the pack case 300. The position and number of drain ports 360 can be modified and changed to match with various environments in which the present disclosure is realized.

FIG. 13 shows an enlarged cross section of the drain port 360 when the pack case 300 is viewed from the front. The cross-sectional size of the drain port 360 increases from the inside to the outside of the pack case 300. For example, if the drain port 360 has a conical shape (i.e., a truncated cone shape) with its upper surface cut, the inner diameter of the cross section of the drain port 360 increases from the inside to the outside of the pack case 300. At this time, the bottom surface of the drain port 360 is inclined from the inside to the outside of the pack case 300, and its height is reduced. Thereby, the water inside the pack case 300 can be smoothly discharged to the outside through the drain port 360.

Meanwhile, referring again to FIGS. 9 and 10, in order to protect the battery cells and facilitate housing, the cell module assembly 100 may be housed in the auxiliary case 310 and then again housed in the pack case 300 together with the auxiliary case 310. At this time, the auxiliary case 310 also includes at least one opening 310a on the bottom surface and/or the edge of the bottom surface of the auxiliary case 310. FIG. 10 shows a case where an opening 310a is provided at the edge of the bottom surface of the auxiliary case 310. More specifically, the opening 310a may be provided in the bottom surface of the auxiliary case 310, may be arranged along the edge of the bottom surface of the auxiliary case 310, or may be arranged at a corner of the bottom surface of the auxiliary case 310. If water is also generated inside the auxiliary case 310, the water is drained to the outside of the auxiliary case 310 through the opening 310a. The water discharged to the outside of the auxiliary case 310 flows through the protruding surface 330 of the pack case 300 and/or the first drain passage 340 and/or the second drain passage 350 as described above, and then is discharged to the outside of the battery pack through the drain port 360.

Further, the shape of the bottom surface of the auxiliary case 310 may be flat as shown in FIGS. 8 and 9. However, the present disclosure is not limited those illustrated, and various modifications and changes are possible. For example, the bottom surface of the auxiliary case 310 may also include components having the same shape and structure as the protruding surface 330 and/or the first drain passage 340 and/or the second drain passage 350, similar to the bottom surface of the pack case 300.

Next, a description will be given of how the battery pack according to the embodiment of the present disclosure seals the drain port during a thermal event to improve fire extinguishing performance.

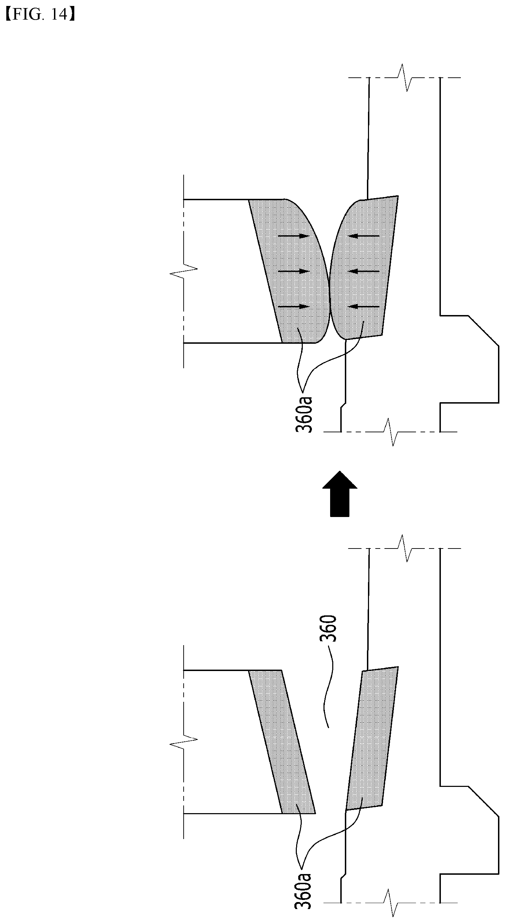

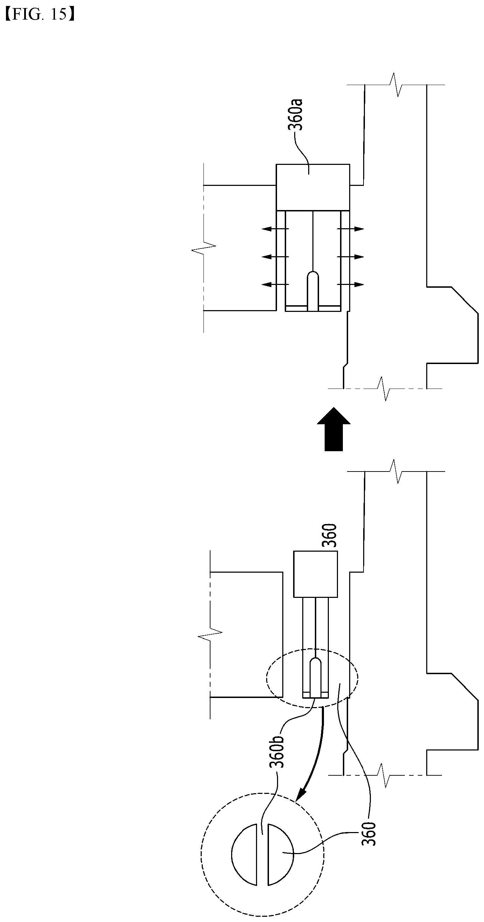

According to one embodiment of the present disclosure, a thermal expansion member 360a provided in the drain port 360 of the pack case 300 is included. FIGS. 14 and 15 each show embodiments of the thermal expansion member 360a. FIG. 14 shows a case where the thermal expansion member 360a is arranged in contact with the whole or a part on the inner surface of the drain port 360. FIG. 15 shows a case where the thermal expansion member 360a is arranged apart from the inner surface of the drain port 360 by a prescribed distance.

FIG. 14 shows a case where the thermal expansion member 360a is arranged in contact with the whole or a part on the inner surface of the drain port 360. The thermal expansion member 360a may surround the whole of the inner surface of the drain port 360. Alternatively, the thermal expansion member 360a may be arranged on a part of the inner surface of the drain port 360. In the latter case, for example, the thermal expansion member 360a may be arranged only in a part of the drain port 360 in the longitudinal direction, but the thermal expansion member 360a may be arranged entirely along the perimeter of the vertical cross section of the drain port 360. That is, as will be described later, if a fire or thermal runaway occurs in the cell module assembly 100, it is sufficient that the thermal expansion member 360a can effectively seal the drain port 360.

FIG. 15 shows a case where the thermal expansion member 360a is arranged apart from the inner surface of the drain port 360 by a prescribed distance. In this case, a thermal expansion member coupling portion 360b crossing the cross section of the drain port 360 is further provided. In FIG. 15, the drain port 360 and the thermal expansion member coupling portion 360b crossing it are shown in cross section when viewed from the inlet side of the drain port 360.

For example, at least one end of the thermal expansion member 360a may be provided with a groove, and the thermal expansion member coupling portion 360b may have a bar shape. The thermal expansion member 360a can be arranged apart from the inner surface of the drain port 360 by a prescribed distance in such a manner that the thermal expansion member coupling portion 360b is fixedly coupled to the groove of the thermal expansion member 360a. When viewed at a cross section of the drain port 360, for example, the inner surface of the drain port 360 and the thermal expansion member 360a may be arranged coaxially.

Meanwhile, the thermal expansion member 360a may have a pin shape arranged along the path of the drain port 360 by way of example. FIG. 15 shows a case where the thermal expansion member 360a is exemplarily formed in a pin shape, but the present disclosure is not limited thereto, and if a fire or thermal runaway of the cell module assembly 100 occurs, it is sufficient that the thermal expansion member 360a has a structure or shape that can effectively seal the drain port 360.

Further, FIG. 15 shows a case in which a thermal expansion member coupling portion 360b is provided at the inlet of the drain port 360 (inside the pack case 300), but the present disclosure is not limited thereto, and the thermal expansion member coupling portion 360b may be provided in the path of the drain port 360, or may be provided at the outlet of the drain port 360 (outside the pack case 300). That is, the shape, position and structure of the thermal expansion member coupling portion 360b are sufficient as long as they allow the thermal expansion member 360a to be positioned in the drain port 360 without the thermal expansion member coupling portion 360b blocking the drain port 360.

The thermal expansion member 360a is configured to expand in volume at a predetermined temperature or higher to seal the drain port 360. If a fire or thermal runaway occurs in the cell module assembly 100, the thermal expansion member 360a expands in volume due to the high temperature gas, and the volume-expanded thermal expansion member 360a may seal the drain port 360. When supplying a fire extinguishing agent (fire extinguishing liquid) from the fire extinguishing unit (e.g., a fire extinguishing tank 400 located at the upper part of the cell module assembly 100) to the inside of the pack case 300, due to the thermal expansion member 360a that seals the drain port 360, the fire extinguishing agent (fire extinguishing liquid) is not discharged to the outside of the pack case 300 through the drain port 360. Thereby, the fire extinguishing agent (fire extinguishing liquid) can remain in the cell module assembly 100 inside the pack case 300 for a longer period of time. That is, fire or thermal runaway of the cell module assembly 100 can be suppressed more stably.

Meanwhile, the present disclosure is not limited to the above-mentioned fire extinguishing tank 400, and any fire extinguishing unit that can supply a fire extinguishing agent (fire extinguishing liquid) into the inside of the pack case 300 can be applied. For example, it is possible that the fire extinguishing unit is located outside the pack case 300 and supplies a fire extinguishing agent (a fire extinguishing liquid) to the inside of the pack case 300 through a pipe connected with the fire extinguishing unit. Alternatively, for example, a cooling plate structure located at the upper or lower part of the pack case 300 may be used to supply a fire extinguishing agent (extinguishing liquid) into the pack case 300 when a thermal event occurs. The present disclosure is not limited to the above-mentioned fire extinguishing unit, and can be applied through various changes and modifications to match with the environment in which the present disclosure is realized.

For this purpose, the thermal expansion member 360a may comprise various thermal expansion materials known at the time of filing the present application. For example, the thermal expansion member 360a may be a polymer material with a high thermal expansion coefficient. Polymer materials, such as PDMS (Poly-Di-Methyl-Siloxane), polyvinyl acetate, polystyrene, butyl(meth)acrylate, hexyl(meth)acrylate, n-octyl(meth)acrylate, isooctyl(meth)acrylate, 2-ethylhexyl(meth)acrylate, isononyl(meth)acrylate, and a combination thereof can be used to enable thermal expansion.

Further, the thermal expansion member 360a may further include a heat-resistant material. For example, the thermal expansion member 360a may configured such that its outer surface is coated with a heat-resistant material such as ceramic. Alternatively, a shim made of a heat-resistant material such as ceramic may be provided inside the thermal expansion member 360a along the longitudinal direction of the thermal expansion member 360a. For example, the thermal expansion member 360a surrounds a shim made of a heat-resistant material. Accordingly, it can be configured so as to be not damaged even though the volume expands due to the heat of the venting gas.

The thermal expansion of the thermal expansion member 360a may be appropriately set depending on the type or thermal expansion coefficient of the thermal expansion material included in the thermal expansion member 360a. And, the degree of thermal expansion of the thermal expansion member 360a can be appropriately set by the user in accordance with various conditions such as the size or shape of the thermal expansion member 360a or the drain port 360 and the type of battery cell.

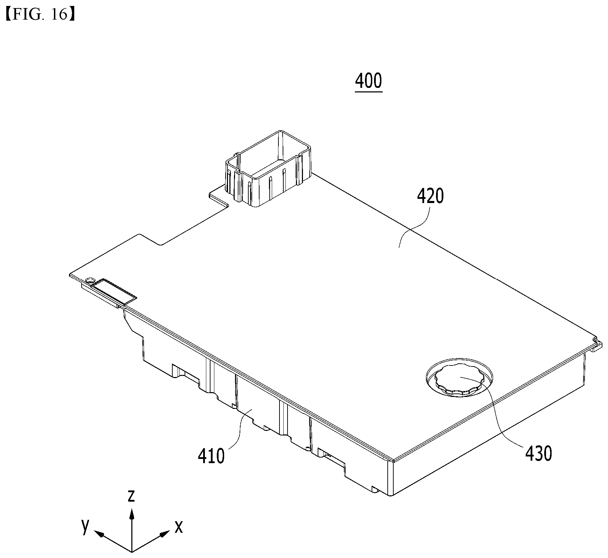

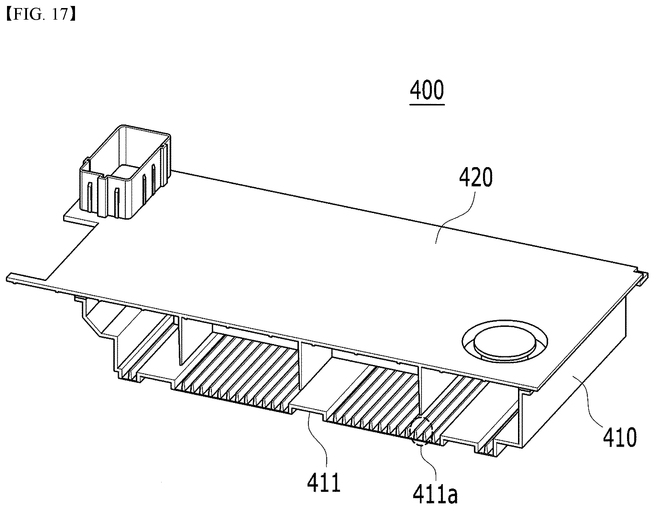

FIG. 16 is a perspective view of a fire extinguishing tank 400 included in the battery pack of FIG. 5. FIG. 17 is a perspective cross-sectional view of the fire extinguishing tank 400 of FIG. 16, and shows a cross section taken along line A5-A5' of FIG. 5.

As described above in FIG. 1, the fire extinguishing tank 400 includes a lower tank 410 and an upper cover 420. The lower tank 410 and the upper cover 420 may be manufactured separately and seal bonded together, or may be manufactured integrally. The upper cover 420 may further include an injection port 430 capable of injecting a fire extinguishing agent. The injection port 430 can be closed with a stopper to seal the fire extinguishing tank 400.

The portion formed thinly in the base plate 411 of the lower tank 410 may function as a fragile portion 411a. That is, when a thermal event occurs in the battery cell 110 of the cell module assembly 100, the fragile portion 411a having a relatively thin thickness may be damaged first. When the fragile portion 411a is damaged and an opening is formed in the base plate 411, the fire extinguishing agent held inside the fire extinguishing tank 400 may be discharged to the cell module assembly 100 side via the fragile portion 411a.

The fragile portion 411a may be provided in a plurality of numbers. For example, the fragile portion 411a may have a shape narrow in width and long in length. That is, the fragile portion may have a linear shape, and may have a straight-line shape arranged in parallel with one edge of the fire extinguishing tank 400, and each fragile portion 411a may be arranged in parallel with one another.

Meanwhile, according to the present embodiment, the longitudinal direction of the battery cell 110 (e.g., the Y-axis direction in the figure) and the longitudinal direction of the fragile portion 411a (e.g., the X-axis direction in the figure) may be orthogonal to each other. That is, a plurality of fragile portions 411a are arranged to intersect with the longitudinal direction of the battery cell 110. Accordingly, the fire extinguishing agent can be supplied all together through the plurality of opened fragile portions 411a via the battery cell 110 along the longitudinal direction of the battery cell 110 where a thermal event has occurred, and the battery cell 110 in which a thermal event has occurred can be extinguished more efficiently and quickly.

The lower surface of the base plate 411 of the fire extinguishing tank 400 and the upper surface of the cell module assembly 100 have shapes that generally match each other. Accordingly, since the fire extinguishing tank 400 is arranged in closer contact with the cell module assembly 100, the battery cell 110 whose temperature has risen can be more effectively cooled, and a fire extinguishing agent can be injected more quickly into the battery cell 110 where overheating or ignition has occurred. Further, more extinguishing agent can be efficiently housed in the fire extinguishing tank 400. That is, if the height of the base plate 411 of the lower tank 410 of the fire extinguishing tank 400 is constant as a whole, the fire extinguishing tank 400 houses less fire extinguishing agent due to the corresponding empty space.

The fire extinguishing agent provided in the fire extinguishing tank 400 may be, for example, in the form of fire extinguishing liquid. Redundant description will be omitted and reference will be made to those described above.

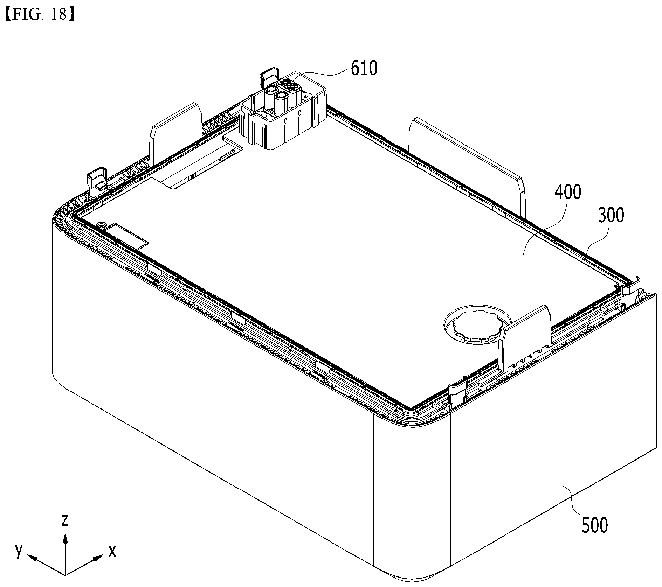

FIG. 18 is a perspective view of a battery pack in which all the constituent elements of the above-mentioned battery pack are coupled with each other with reference to FIGS. 5 to 17.

In addition, for the portions where the description regarding the battery pack in FIGS. 5 to 18 overlaps with the description regarding the battery pack in FIGS. 1 to 4, reference is made to those described above with reference to FIGS. 1 to 4.

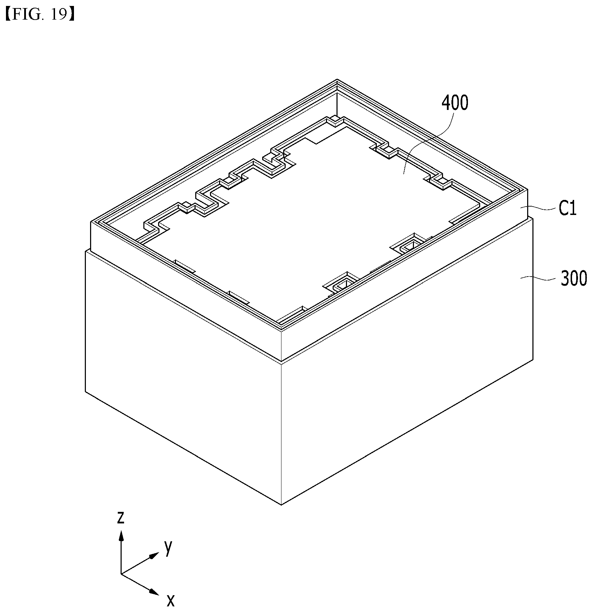

Meanwhile, the pack case 300 may be provided in a plurality of numbers, and be configured so as to be stacked in the up and down direction. This will be described in more detail with reference to FIGS. 19 to 21.

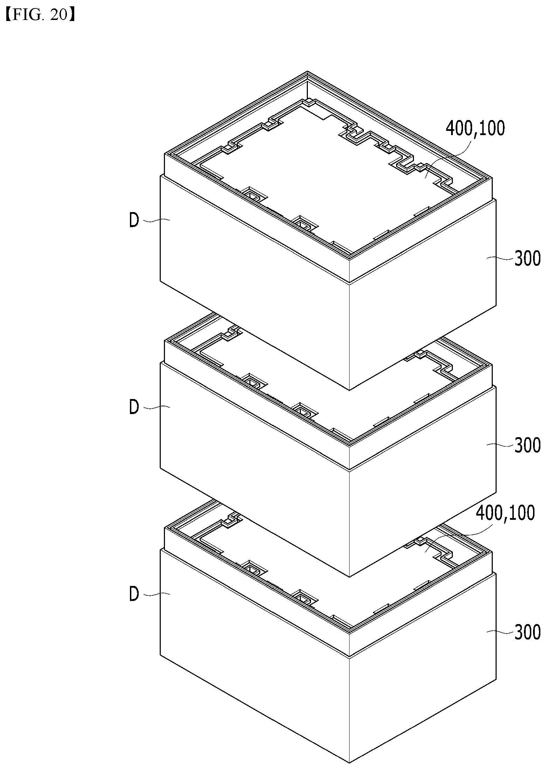

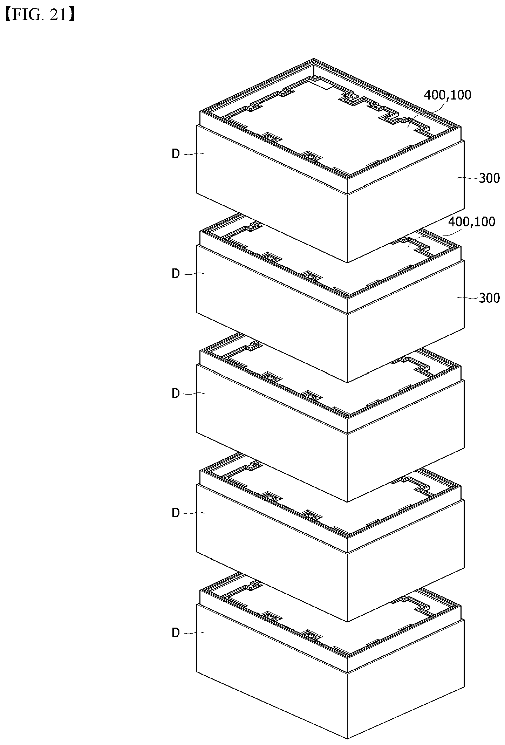

FIG. 19 is a perspective view schematically showing at least a partial configuration of the battery pack of FIGS. 1 to 18 according to the present disclosure. Further, FIGS. 20 and 21 are diagrams showing an embodiment in which the pack cases 300 shown in FIG. 19 are stacked in a plurality of numbers. FIGS. 19 to 21 schematically show the battery pack for convenience of understanding. For detailed configuration of the battery pack, reference is made to the details described above in FIGS. 1 to 18.

Referring to FIG. 19, the pack case 300 may include a bottom portion and a side wall portion. The cell module assembly 100 can be housed in the internal space of the pack case 300, and the upper surface of the cell module assembly 100 can be covered with the fire extinguishing tank 400, thereby constituting a battery pack. For reference, in FIG. 19, the height of the upper side of the pack case 300 is shown to be greater than the height of the upper surface of the fire extinguishing tank 400. However, FIG.19 is a schematic diagram and is only an example, and the present disclosure is not limited to those shown in FIG. 19. That is, on the contrary, the height of the upper surface of the fire extinguishing tank 400 may be greater than the height of the upper side of the pack case 300, and the height of the upper surface of the fire extinguishing tank 400 and the height of the upper side of the pack case 300 may be equal. Thus, various modifications are possible.

The pack cases 300 as shown in FIG. 19 may be provided in a plurality of numbers to form a stacked structure of battery packs as shown in FIG. 20 or FIG. 21. At this time, the battery pack in FIG. 19 may be one unit pack. And, such unit packs are provided in a plurality of numbers, so that an entire battery pack can be constructed in a module-stacked manner as shown in FIG. 20 or FIG. 21.

More specifically, for example, the configuration of FIG. 20 illustrates that three unit packs D are stacked in the up and down direction. And, the configuration of FIG. 21 illustrates that five unit packs D are stacked in the up and down direction. The present disclosure is not limited to those illustrated, and the number of unit packs D can be variously changed to match with the environment in which the present disclosure is implemented.

For example, if the present disclosure is realized by a battery pack as an energy storage system (ESS), the number of unit battery packs can be adjusted, so that various voltage bands and/or storage capacities of the energy storage device can be realized to match with the relevant environment. According to such an embodiment configuration of the disclosure, by stacking one unit pack with a common structure in various ways, it is possible to comply with products with various voltage bands and/or storage capacities depending on the number of stacking. For example, by adjusting the number of stacking of the same unit pack, it may be possible to realize both a low-pressure band product as shown in FIG. 20 and a high-pressure band product as shown in FIG. 21. Therefore, compared to products limited only to specifications of a specific voltage band, economic efficiency and compatibility can be improved. Further, according to such an embodiment configuration, products with various capacities can also be realized depending on the number of stacking.

In other words, when stacked unit packs are connected in series, products with various voltage bands can be realized depending on the number of stacking. Further, when stacked unit packs are connected in parallel, products with various capacities (storage capacity) can be realized depending on the number of stacking.

In particular, each unit pack D may include a cell module assembly 100 therein. Further, each unit pack D includes a connector 610 so that each cell module assembly 100 can be electrically connected to each other during stacking as described above. In particular, such connectors 610 may be configured to be coupled to each other due to the vertical stacking of each unit pack D.

Moreover, in the above-mentioned embodiment configuration, each unit pack D may house a fire extinguishing tank 400 along with a cell module assembly 100. That is, each unit pack D includes a fire extinguishing tank 400 at the upper part of the cell module assembly 100, as described above. The battery packs stacked in a plurality of numbers have a stacked structure of fire extinguishing tank 400 - cell module assembly 100 - fire extinguishing tank 400 - cell module assembly 100 from top to bottom. The stacked battery pack of the present disclosure having such a structure can form a battery pack by increasing (expanding) the number of cell module assemblies 100 to increase various voltage bands and/or storage capacities, and also can safely provide against a thermal event such as a fire in the cell module assembly 100. Therefore, according to this embodiment configuration of the present disclosure, the safety of the battery pack can be further improved.

Referring again to FIG. 19, another example of a coupling method between battery packs (pack case 300) stacked up and down is as follows. At the upper end of the side wall portion of the pack case 300, there may be a step formed in a concave shape inward, such as a step portion C1 for coupling. For example, the side wall portion of the pack case 300 has a thinner thickness. Further, although not shown in FIG. 19, a coupling recess may be formed in the bottom of the pack case 300 so that the coupling step C1 of the side wall part can be inserted. That is, when the pack case 300 stacks different pack cases 300 in the up and down direction, the coupling step C 1 formed on the upper side of the side wall portion of the lower pack case 300 is inserted into the coupling recess formed on the bottom of the upper pack case 300. Accordingly, when the plurality of pack cases 300 are stacked and coupled in the up and down direction, the outer surface of the pack case 300 may have a flat shape as a whole.

On the other hand, the coupling method for the fastening structure between the battery packs stacked one above the other is not limited to those shown in FIG. 19 and/or FIG. 8, and various other coupling methods can be modified or changed and applied to the present disclosure.

Further, the battery packs of the present disclosure can be connected to a battery management system (BMS, not shown). The battery management system monitors and manages the battery pack(s). The battery management system may be located on the uppermost layer of battery packs stacked one above the other. However, the position of the battery management system is not limited to those described above, and can be modified and changed in various ways to match with the method or environment in which the present disclosure is realized.

The battery pack according to the present disclosure may further include various other components included in the battery pack, in addition to the above-mentioned components. For example, the battery pack according to the present disclosure may include various electrical components for controlling or managing the charge and discharge of the battery pack, such as a battery management system (BMS), relays, fuses, and current sensors.

An energy storage system (ESS) according to the present disclosure includes one or more battery packs according to the present disclosure as described above. Further, the energy storage device according to the present disclosure may further include common components included in energy storage devices in addition to the battery pack.

The terms representing directions such as the upper side, the lower side, the left side, and the right side have been used in the present embodiment, but the terms used are provided simply for convenience of description and may become different according to the position of an object, the position of an observer, or the like.

While the present invention has been described in detail with reference to specific embodiments and illustrative drawings, the present invention is not limited thereto, and it will be apparent to those skilled in the art that various changes and modifications can be made within the spirit and scope of the disclosure as defined by the appended claims.

### [Description of Reference Numerals]

100: cell module assembly
110: battery cell
120: end plate
130: busbar housing
140: strap
200: blocking member
210: support plate
220: swelling pad
230: through hole
300: pack case
300a: lower case
300b: upper case
310: auxiliary case
310a: opening
320: venting port
330: protruding surface
340: first drain passage
350: second drain passage
360: drain port
360a: thermal expansion member
360b: thermal expansion member coupling portion
370: connector through-hole portion
380: compartment wall
400: fire extinguishing tank
410: lower tank
411: base plate
411a: fragile portion
412: side wall
420: upper cover
430: injection port
500: outer cover
600: electrical connection unit
610: connector

## Claims

1. A battery pack comprising:
a cell module assembly including a battery cell stack in which a plurality of battery cells are stacked;
a pack case that houses the cell module assembly in its internal space; and
a fire extinguishing unit capable of extinguishing the battery cells by supplying a fire extinguishing agent into the pack case when a thermal event occurs in the battery cells,
wherein the pack case includes at least one drain port on at least one of a longitudinal edge and a widthwise edge of a bottom surface of the pack case.

2. The battery pack according to claim 1,
further comprising a thermal expansion member that is located in the drain port and is expanded in volume at a prescribed temperature or higher to seal the drain port.

3. The battery pack according to claim 2, wherein:
the thermal expansion member is arranged apart from an inner surface of the drain port by a prescribed distance, and
the battery pack further comprises a thermal expansion member coupling portion that is arranged across a cross section of the drain port so as to secure the thermal expansion member.

4. The battery pack according to claim 3, wherein:
at least one end of the thermal expansion member is provided with a groove,
the thermal expansion member coupling portion has a bar shape, and
the thermal expansion member coupling portion is fixedly coupled to the groove of the thermal expansion member.

5. The battery pack according to claim 3, wherein:
the thermal expansion member coupling portion is arranged on at least one of an inlet and an outlet of the drain port.

6. The battery pack according to claim 2, wherein:
the thermal expansion member has a pin shape that is arranged along the path of the drain port.

7. The battery pack according to claim 2, wherein:
the thermal expansion member and an inner surface of the drain port are arranged coaxially.

8. The battery pack according to claim 2, wherein:
the thermal expansion member is surrounded by at least a portion of an inner surface of the drain port while contacting with each other.

9. The battery pack according to claim 2, wherein:
the thermal expansion member is made of a polymer material.

10. The battery pack according to claim 9, wherein:
the thermal expansion member is any one selected from the group consisting of PDMS (Poly-Di-Methyl-Siloxane), polyvinylacetate, polystyrene, butyl(meth)acrylate, hexyl(meth)acrylate, n-octyl(meth)acrylate, isooctyl(meth)acrylate, 2-ethylhexyl(meth)acrylate, isononyl(meth)acrylate, and a combination thereof.

11. The battery pack according to claim 2, wherein:
the thermal expansion member includes a shim of a heat-resistant material located inside the thermal expansion member along the longitudinal direction of the thermal expansion member.

12. The battery pack according to claim 1, wherein:
the fire extinguishing unit is a fire extinguishing tank that is located above the cell module assembly to cover an upper surface of the pack case.

13. The battery pack according to claim 1, wherein:
the fire extinguishing agent is a fire extinguishing agent in a liquid state.

14. The battery pack according to claim 1, wherein:
a bottom surface of the drain port is lowered in height from the inside to the outside of the pack case.

15. The battery pack according to claim 1, wherein:
the cross section of the drain port has a tapered shape that increases in size from the inside to the outside of the pack case.

16. The battery pack according to claim 1, wherein:
in the internal space of the pack case, the bottom surface further comprises a plurality of protruding surfaces that protrudes upward from the bottom surface, and a first drain passage between the plurality of protruding surfaces, and
the plurality of protruding surfaces are arranged in a row along at least one of a length direction and a width direction of the pack case.

17. The battery pack according to claim 16, wherein:
the protruding surface comprises:
an uppermost surface located at the center of the protruding surface and on which the cell module assembly is seated; and
an inclined surface formed radially around the uppermost surface,
wherein a height of the inclined surface decreases from the uppermost surface toward an edge of the protruding surface.

18. The battery pack according to claim 16, wherein:
the uppermost surface is formed in a circular plate shape, and
the radially formed inclined surface is arranged at an equal angle with respect to the center of the protruding surface.

19. The battery pack according to claim 16, wherein:
the first drain passage is arranged in parallel to at least one of the longitudinal edge and the widthwise edge of the bottom surface of the pack case.

20. The battery pack according to claim 16, wherein:
a bottom surface of the drain port has a height equal to or lower than that of the first drain passage.

21. The battery pack according to claim 16, wherein:
the internal space of the pack case further includes a second drain passage arranged at a longitudinal edge and a widthwise edge of the bottom surface of the pack case, and
the second drain passage has a height equal to or lower than that of the first drain passage.

22. The battery pack according to claim 21, wherein:
a bottom surface of the drain port has a height equal to or lower than that of the second drain passage.

23. The battery pack according to claim 16, wherein:
the pack case further includes a plate-shaped compartment wall arranged across the pack case,
the internal space of the pack case is divided into a housing space for the cell module assembly and a housing space for an electrical connection unit on the basis of the compartment wall, and
the plurality of protruding surfaces and the first drain passage are provided in at least one of the housing space of the cell module assembly and the housing space of the electrical connection unit.

24. The battery pack according to claim 16,
further comprising an auxiliary case made of metal that primarily houses the cell module assembly,
the cell module assembly is housed in the auxiliary case, with the auxiliary case being seated on an uppermost surface of the protruding surface of the pack case, and
the auxiliary case includes at least one opening on a bottom surface of the auxiliary case.

25. The battery pack according to claim 24, wherein:
the opening is provided at an edge of the bottom surface of the auxiliary case or a corner of the bottom surface of the auxiliary case.

26. The battery pack according to claim 1, wherein:
the battery pack is provided in a plurality of numbers, and
the plurality of battery packs are mechanically or electrically connected to each other.

27. The battery pack according to claim 26, wherein:
the plurality of battery packs can be stacked in an up and down direction.

28. The battery pack according to claim 26, wherein:
the electrical connection between the plurality of battery packs is connected in series so that voltage bands of the plurality of stacked battery packs can be realized in various ways.

29. The battery pack according to claim 26, wherein:
the electrical connection between the plurality of battery packs are connected in parallel so that the storage capacity of the plurality of stacked battery packs can be realized in various ways.

30. An energy storage system comprising the battery pack according to claim 1.
